# EUROPÄISCHE PATENTSCHRIFT

(11) **EP 3 104 479 B1**
(45) Veröffentlichungstag und Bekanntmachung des Hinweises auf die Patenterteilung: **29.08.2018**
(21) Anmeldenummer: 16173132.8
(22) Anmeldetag: 06.06.2016
(51) Int. Cl.: H02G 3/22

(54) **EINBAUGEHÄUSE ZUR EINHAUSUNG UND/ODER BEFESTIGUNG VON INSTALLATIONEN**
FLUSH MOUNTED BOX FOR HOUSING AND/OR FIXING INSTALLATIONS
BOITIER DE MONTAGE DESTINE A LOGER ET/OU FIXER DES INSTALLATIONS

(30) Priorität: 09.06.2015 AT 3622015
(43) Veröffentlichungstag der Anmeldung: 14.12.2016
(73) Patentinhaber: Winner, Franz, 6173 Oberperfuss (AT)
(72) Erfinder: WINNER, Franz, 6173 Oberperfuss (AT); TAMERL, Alexander, 6433 Ötz (AT)
(74) Vertreter: Torggler & Hofinger Patentanwälte

(56) Entgegenhaltungen:
- BE-A1- 857 267
- DE-U1-202004 011 259
- DE-U1-202013 000 646
- GB-A- 2 216 220
- JP-A- 2011 074 969
- US-A- 4 419 535

## Beschreibung

Die Erfindung betrifft ein Einbaugehäuse mit den Merkmalen des Oberbegriffes des Anspruchs 1.

Derartige Einbaugehäuse sind bereits bekannt und werden beispielsweise in der US 4,634,015, der DE 20 2004 011259 U1 und der DE 20 2013 000646 U1 gezeigt. Einbaugehäuse dieser Art werden an Gebäudewänden befestigt und umschließen elektrische oder sanitäre Installationen oder Installationselemente. Weiters wird in der EP 0 710 751 A2 ein Element zur Befestigung von Apparaten und Gegenständen an einer isolierten Gebäudefassade gezeigt. Sowohl das Gehäuse als auch das Element zur Befestigung oder Einhausung von Installationen oder Installationselemente werden an der Gebäudewand befestigt. Ein Anbau an die Gebäudewand (Mauerwerk, Beton, ...) äußert sich oftmals als kompliziert, da das Befestigungselement oder das Einbaugehäuse in einer zuvor geschaffenen Öffnung in der bereits am Mauerwerk befestigten Isolationsschicht an der Gebäudewand befestigt werden muss. Diese Befestigung erfolgt zumeist über Schrauben, wobei vorerst Löcher in die Wand gebohrt werden müssen, um den Schrauben entsprechenden Halt bieten zu können. Bedingt durch die beengten Platzverhältnisse der Öffnung in der Isolationsschicht ist es schwierig, diese Wandbefestigung zu realisieren. Weiters stellt sich oft das Problem dabei heraus, dass aus der Wand herausgeführte elektrische oder sanitäre Installationen durch den Sockel des Elementes oder die Wanne des Gehäuses durchgefädelt werden müssen, was den Anbau des Befestigungselementes oder des Gehäuses zusätzlich deutlich erschwert. Grundsätzlich entstehen durch manche Gehäuse bzw. Befestigungselemente Kältebrücken in der Isolationsschicht des Gebäudes, da die Isolationsschicht unterbrochen wird und Hohlräume geschaffen werden. Das grundsätzliche Problem, elektrische oder sanitäre Installationen in oder unter einer Isolationsschicht mit einem Gehäuse zu umschließen oder derartige Isolationen mit Befestigungselement an einer isolierten Gebäudewand zu fixieren wird zwar durch den Stand der Technik gelöst, dennoch entsteht eine Kältebrücke aufgrund der geschaffenen Hohlräume in der Isolationsschicht oder der Anbau erfolgt sehr kompliziert und unter ungünstigen Platzverhältnissen. Mit anderen Worten besteht das Problem darin, eine im Anbau unkomplizierte und universelle Lösung zum Einhausen und Befestigen von Installationselementen zu erzielen, wobei keine Kältebrücke in der Isolationsschicht am Gebäude entstehen soll.

Aufgabe der Erfindung ist es, die vorbeschriebenen Nachteile zu vermeiden und ein gegenüber dem Stand der Technik verbessertes Einbaugehäuse anzugeben.

Dies wird beim erfindungsgemäßen Einbaugehäuse durch die Merkmale des Kennzeichens des Anspruchs 1 gelöst. Dadurch, dass zumindest ein Dämmstoffkörper in den Einbaurahmen einsetzbar ist, wobei sich der Dämmstoffkörper im Montagezustand zwischen der Gebäudewand und dem Abdeckelement befindet, wird die Möglichkeit geschaffen, durch den Dämmstoffkörper bzw. das Abdeckelement elektrische oder sanitäre Installationen an einer Gebäudewand zu überdecken und den freigelegten Bereich im Dämmstoff bzw. der vorgesetzten Fassade durch einen Dämmstoffkörper zu isolieren. Das Abdeckelement kann gleichzeitig auch als Geräteträger agieren und bspw. zur Aufnahme von elektrischen oder sanitären Installationen oder Installationselementen dienen. Bspw. kann an diesem Abdeckelement eine Steckdose, ein elektrischer Verbraucher oder auch ein Wasserhahn befestigt werden. Mechanisch beanspruchte Komponenten können nicht direkt an einer Dämmstoffplatte befestigt werden, da deren Oberfläche oftmals zu weich und auch deren Eigenstabilität nicht ausreichend ist, um den mechanischen Belastungen Stand zu halten. Durch die Verwendung des Einbaugehäuses, einem darin befindlichen Dämmstoffkörper und einem am Einbaugehäuse befestigten Abdeckelement wird genügend Stabilität erreicht, um am Abdeckelement mechanisch beanspruchte Komponenten, wie zum Beispiel eine Steckdose oder einen Lichtschalter befestigen zu können. Das Einbaugehäuse kann sowohl als Behälter zur Einhausung von Komponenten als auch als Träger zum Befestigen von Komponenten dienen.

Wenn der Dämmstoffkörper in Montagestellung des Einbaugehäuses zur Gebäudewand beabstandet ist, bleibt hinter dem Dämmstoffkörper ausreichend Freiraum für diverse Installationen, wie zum Beispiel eine Trennstelle oder ein Absperrhahn. Weiters kann zum Beispiel ein Kabel, welches in weiterer Folge durch den Dämmstoffkörper geführt wird, in einem runden Verlauf in den Dämmstoffkörper geführt werden und wird im Kontaktbereich des Dämmstoffköpers zur Gebäudewand nicht geknickt.

Wenn gegenüber der Öffnung des Einbaurahmens eine Ausnehmung mit einer Umrandung ausgebildet ist, wobei die Umrandung in Montagestellung zumindest abschnittsweise mit der Gebäudewand kontaktiert oder von der Gebäudewand beabstandet ist, so ist es möglich, den Einbaurahmen direkt in eine Öffnung in der Isolierungsschicht des Gebäudes einzuschieben. Durch die großzügig dimensionierte Ausnehmung mit ihrer Umrandung werden elektrische oder sanitäre Installationen großflächig umrahmt und eingefasst. Toleranzen an der Gebäudewand oder vorstehende Unebenheiten wie beispielsweise Mörtel oder die Rippen von Ziegeln werden durch die Beabstandung der Umrandung zur Gebäudewand ausgeglichen.

Wenn der Einbaurahmen im Wesentlichen rechteckig ausgeformt ist, müssen keine komplizierten Formen aus dem Dämmstoff herausgeschnitten werden. Die Ausnehmung kann bspw. mit einem Styroporschneider oder einem scharfen Messer aus dem Dämmstoff ausgeschnitten werden. Hierzu kann der Einbaurahmen selbst als Schablone dienen, indem er an die Wand angehalten und dessen Umfang an der Fassade markiert wird. Alternativ kann die Ausnehmung bei der Anbringung der Wärmedämmung freigelassen werden.

Als besonders vorteilhaft hat es sich dabei herausgestellt, wenn der Einbaurahmen umfangseitig zumindest abschnittsweise einen Befestigungsabschnitt zum Befestigen an einem Dämmstoff ausbildet. Durch die Montage des Einbaurahmens direkt am Dämmstoff muss keine Befestigung des Rahmens mit der Gebäudewand erfolgen. Die großflächige Umrahmung der elektrischen oder sanitären Installationen bleibt dabei erhalten und ein kompliziertes Befestigen in einer kleinräumigen Öffnung in der Isolationsschicht an der Gebäudewand ist nicht notwendig.

Der Einbaurahmen bildet umfangseitig an zumindest einer Fläche zumindest einen in Montagelage des Einbaurahmens an der Außenseite des Dämmstoffes anliegenden Abschlusssteg aus, sodass nach der Anpassung des Einbaurahmens dieser bis zum Anschlag in die Isolation an der Gebäudewand eingeschoben werden kann. Durch den zumindest einen Abschlusssteg werden eventuelle Spalten abgedeckt. Weiters bietet der Abschlusssteg die Möglichkeit, den Rahmen zusätzlich mittels Schrauben oder ähnlichem am Dämmstoff zu befestigen. Der Abschlusssteg wird durch das Abdeckelement verdeckt und bleibt nach der Montage des Abdeckelementes verborgen.

Weiters weist der zumindest eine Abschlusssteg zumindest einen Durchbruch auf, durch welchen in Montagestellung des Einbaugehäuses ein Befestigungsmittel - insbesondere Montageschaum, Bauschaum, Isolierschaum, Füllschaum oder Dämmschaum - in einen Hohlraum zwischen dem Dämmstoff und dem Einbaurahmen injizierbar ist. Anstelle von Montageschaum oder dergleichen kann auch Flüssigkleber oder Mörtel verwendet werden. Bei der Verwendung eines anderen Befestigungsmittels ist jedoch darauf zu achten, dass keine Kältebrücken entstehen. Somit ist ein isolierendes Befestigungsmittel vorzuziehen. Durch die Verwendung von Montageschaum als Befestigungsmittel wird der Hohlraum zwischen dem Einbaurahmen und dem rundherum liegenden Dämmstoff ausgefüllt und eine Isolierung als auch ein guter Halt des Rahmens ist gewährleistet.

Wenn das Abdeckelement als vollständig geschlossene Abdeckung an der Öffnung des Einbaurahmens befestigbar ist, entsteht eine optisch anspruchsvolle Oberfläche an der isolierten Gebäudewand. Weiters besteht die Möglichkeit, das Abdeckelement zu entfernen, um z. B. zu darunter liegenden Installationselementen zu gelangen, nachdem auch der Dämmstoffkörper aus dem Rahmen entfernt worden ist. Aus diesem Grund ist eine lösbare Verbindung zwischen Abdeckelement und Einbaurahmen vorgesehen. Wenn das Abdeckelement Vorbereitungen zur Aufnahme von elektrischen oder sanitären Installationen aufweist, kann in weiterer Folge diese Installationen einfach am Abdeckelement befestigt werden. Vorbereitungen können z. B. Löcher als auch Stege oder Befestigungsvorrichtungen für Beleuchtungselemente sein. Wird das Abdeckelement 3 zur Aufnahme von elektrischen oder sonstigen Installationen ausgeführt, so erweist sich eine feste Verbindung mit dem Dämmstoffkörper 4 als vorteilhaft.

Wenn der Einbaurahmen umfangseitig angeordnete Sollbruchstellen zur Anpassung an eine Einbautiefe aufweist, so kann nach Ermittlung der Schichtstärke der Isolierung - welche sich im Wesentlichen aus der Dicke der Dämmstoffplatten ergibt - der Einbaurahmen über die Sollbruchstellen an die Einbautiefe angepasst werden. Ein aufwendiges Abschneiden des Schaftes des Einbaurahmens ist dann nicht notwendig. Entlang der Sollbruchstellen kann der Einbaurahmen werkzeuglos an die Einbautiefe angepasst werden. Anstelle der Sollbruchstellen können auch Markierungen am Einbaurahmen angebracht sein, welche ein Abschneiden durch bspw. eine Säge oder ein Messer zum Erhalt der richtigen Einbautiefe erleichtern.

Wenn der Einbaurahmen teleskopartig zur Anpassung an eine Einbautiefe ausgeführt ist, so kann ohne Kraftaufwand oder ebenfalls werkzeuglos die Einbautiefe eingestellt werden.

Wenn der Dämmstoffkörperumfang im Wesentlichen dieselbe Kontur aufweist wie die Innenseite des Einbaurahmens und der Dämmstoffkörper in den Einbaurahmen einschiebbar ist, so entstehen keine Spalten zwischen der Innenseite des Einbaurahmens und dem Dämmstoffkörper, welche Kältebrücken erzeugen würden. Wenn zwischen dem zumindest einen Dämmstoffkörper und dem Einbaurahmen eine formschlüssige Verbindung herstellbar ist, so bleibt der Dämmstoffkörper nach seinem Einschieben in den Einbaurahmen in einer Position verharrt. Ein sauberer Abschluss zwischen dem Einbaurahmen und dem Dämmstoffkörper ist gewährleistet.

Als besonders vorteilhaft hat es sich dabei herausgestellt, dass der Dämmstoffkörper einen Griff aufweist oder einen Griff ausformt, wobei der Griff zumindest an der von der in Montagestellung von der Gebäudewand abgewandten Seite des Dämmstoffkörpers angeordnet ist. Somit kann nach dem Entfernen des Abdeckelementes der Dämmstofflock an diesem Griff aus dem Einbaurahmen herausgezogen werden, um an dahinter befindliche elektrische oder sanitäre Installationselemente zu gelangen. Das Einschieben des Dämmstoffkörpers in den Rahmen wird aufgrund des Griffes ebenfalls erleichtert. Wenn der Dämmstoffkörper im Wesentlichen aus einem Thermoisolationsmaterial besteht und dieser durch eine Ummantelung eingefasst ist, ergibt sich der Vorteil, dass der meist oberflächenempfindliche Dämmstoff des Dämmstoffkörpers nicht durch oftmaliges Hinein- und Herausziehen aus dem Einbaurahmen beschädigt wird. Weiters kann die Reibung zwischen Dämmstoffkörper und Einbaurahmen aufgrund einer Beschichtung reduziert werden. Ein Hineinschieben und Herausziehen aus dem Einbaurahmen wird somit zusätzlich erleichtert und eine lange Lebensdauer für den Dämmstoffkörper wird erreicht. Alternativ kann der Dämmstoffkörper auch ohne Ummantelung ausgeführt sein.

Gemäß einem weiteren Ausführungsbeispiel ist vorgesehen, dass das Verfahren zum Einbau eines Einbaugehäuses folgende Arbeitsschritte umfasst:
- Schaffen einer Öffnung im Dämmstoff einer thermisch isolierten Gebäudewand und eventuelles Freilegen von einzufassenden Leitungen oder Installationselementen.
- Anpassen des Einsatzrahmens an die durch die Stärke der Dämmstoffschicht vorgegebene Einbautiefe über eine Sollbruchstelle, durch ein Trennverfahren an einer Markierung oder durch einen teleskopartigen Aufbau des Einsatzrahmens.
- Eventuelles Aufsetzen einer Dichtung am Einsatzrahmen.
- Einsetzen des Einsatzrahmens in die Öffnung im Dämmstoff.
- Injizieren des Befestigungsmittels durch den zumindest einen Durchbruch im zumindest einen Abschlusssteg und Ausfüllen des zwischen Dämmstoff und Einsatzrahmen befindlichen Hohlraumes.
- Einsetzen des Dämmstoffkörpers in den Einsatzrahmen.
- Befestigen des Abschlusselementes.

Durch diese Verfahrensschritte wird der Einbau eines Einbaugehäuses erleichtert und das Entstehen einer Kältebrücke verhindert. Weiters ergibt sich durch das vielseitig verwendbare Einbaugehäuse die Möglichkeit, Isolationselemente an einer Gebäudewand zu überdecken und gleichzeitig zu isolieren, bzw. wird die Möglichkeit geschaffen, dass Installationselemente an dem Abschlusselement, welches am Einbaugehäuse befestigt ist, zu montieren.

Weitere vorteilhafte Ausführungsformen sind in den abhängigen Unteransprüchen definiert.

Weitere Einzelheiten und Vorteile der vorliegenden Erfindung werden anhand der Figurenbeschreibung unter Bezugnahme auf die in den Zeichnungen dargestellten Ausführungsbeispiele im Näheren erläutert. Darin zeigen:
- Fig. 1: eine schematische Darstellung eines Einbaugehäuses in der Seitenansicht,
- Fig. 2: eine schematische Darstellung eines Einbaugehäuses in perspektivischer Ansicht ohne Abdeckelement,
- Fig. 3a, 3b: eine schematische Darstellung eines eingebauten Einbaugehäuses zum Überdecken eines an einer Gebäudewand befestigten elektrischen oder sanitären Installationselementes in verschiedenen Ansichten,
- Fig. 4a, 4b: eine schematische Darstellung eines Einbaugehäuses als Befestigungselement mit einer durchgeführten Leitung an einer Gebäudewand,
- Fig. 5a, 5b: ein Einbaugehäuse mit einer durchgeführten Leitung, welche in einer Ausnehmung mündet,
- Fig. 6a bis 6d: Montageschritte Einbaugehäuse Variante ohne Kabeldurchführung und
- Fig. 7a bis 7d: Montageschritte Einbaugehäuse mit Kabeldurchführung zur Verwendung als Geräteträger an einer Gebäudewand.

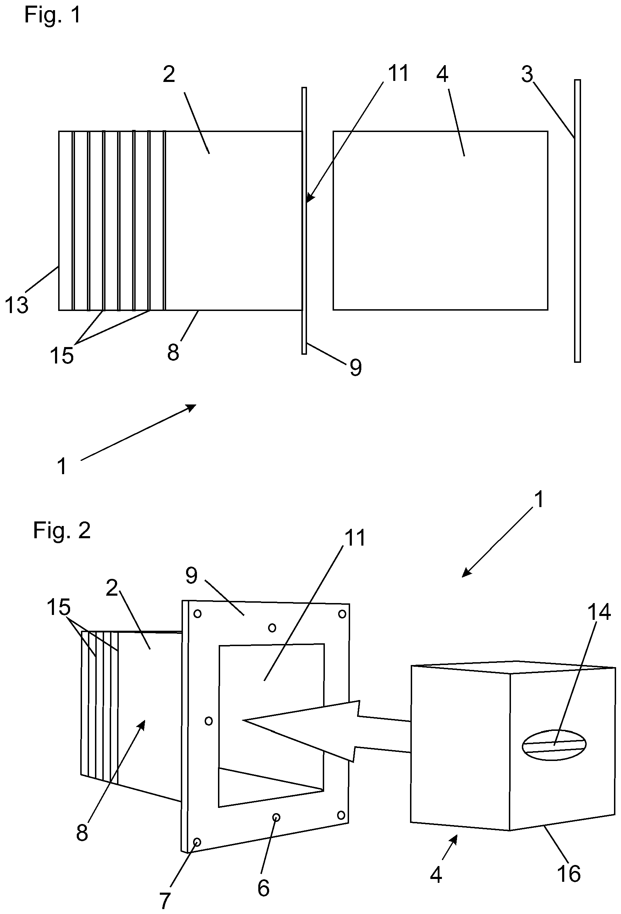

Figur 1 zeigt ein Einbaugehäuse 1 bestehend aus einem Einbaurahmen 2, einem Dämmstoffkörper 4 und einem Abdeckelement 3. Der Einbaurahmen 2 bildet im Bereich, der an der Isolationsschicht der Gebäudewand 31 nach außen gerichteten Öffnung 11 einen Abschlusssteg 9 aus, der in Montagelage bündig an der Außenseite des Dämmstoffes 30 anliegt. Im gegenüberliegenden Bereich des Einbaurahmens 2 befindet sich die Umrandung 13, welche in Richtung Gebäudewand 31 in die Öffnung der aus Dämmstoff 30 bestehenden Isolationsschicht des Gebäudes eingeführt wird. Anstelle einer Installationsschicht kann auch eine vorgesetzte Fassade an einer Gebäudewand 31 gefestigt werden. Eine vorgesetzte Fassade besteht aus Fassadenelementen, welche meist plattenförmig sind und beabstandet beziehungsweise parallel zur Gebäudewand 31 an einem Gebäude ausgerichtet befestigt werden. Der Bereich hinter der vorgesetzten Fassade kann sowohl frei bleiben - in anderen Worten ein Hohlraum zwischen Fassade und Gebäudewand 31 sein - oder mit einem Dämmstoff 30 befüllt werden. Am Einbaurahmen 2 befinden sich Sollbruchstellen 15, über welche der Einbaurahmen 2 an die Stärke der an der Gebäudewand 31 befestigten Isolationsschicht angepasst werden kann. Diese Sollbruchstellen 15 können in verschiedenen Varianten ausgeführt sein. Eine Möglichkeit ist es, die Sollbruchstellen so stark auszuführen, dass ein werkzeugloses Abtrennen der einzelnen Segmente ermöglicht wird. Weiters besteht auch die Möglichkeit, die Sollbruchstellen 15 so auszuführen, dass bspw. mit einem scharfen Messer oder einer Säge der Einbaurahmen an diesen Stellen leicht trennbar ist. Der Dämmstoffkörper 4 wird in die Öffnung 11 des Einbaurahmens 2 eingeführt. Dieser weist im Wesentlichen dieselbe Kontur auf wie die Innenkontur des Einbaurahmens 2. Wenn der Einbaurahmen 2 an die Stärke der an der Gebäudewand 31 angebrachten Isolationsschicht angepasst worden ist, muss auch der Dämmstoffkörper 4 angepasst werden. Wurde der Dämmstoffkörper 4 in den Einbaurahmen 2 eingeführt, kann dieser mit dem Abdeckelement 3 verdeckt werden.

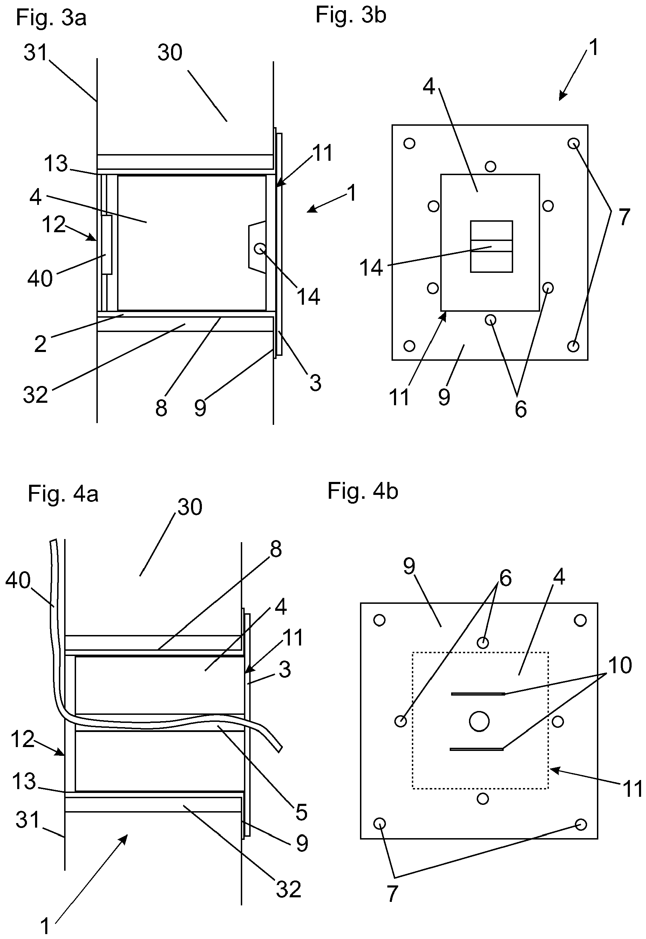

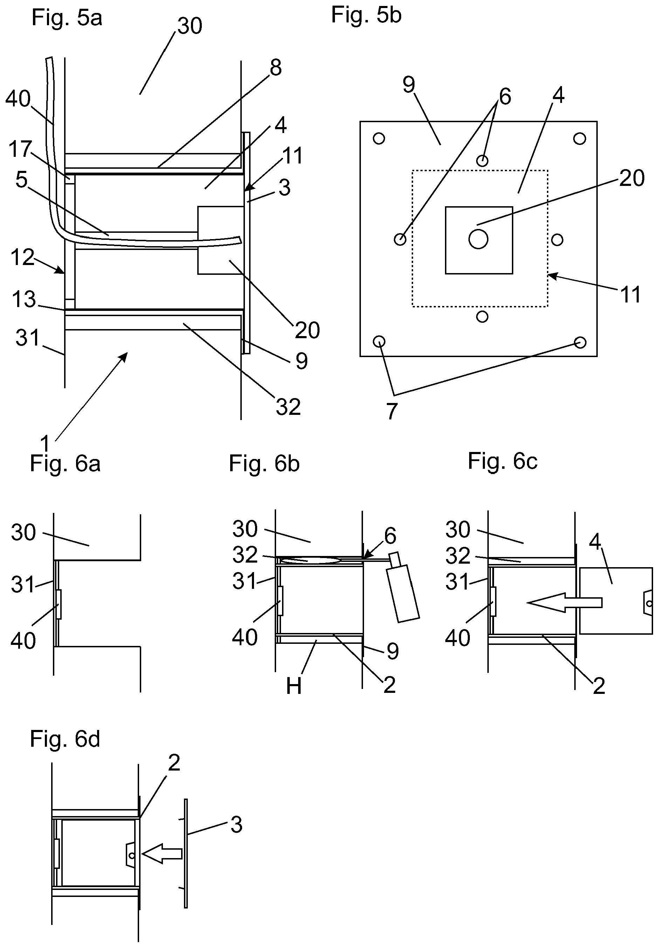

Figur 2 zeigt ein Einbaugehäuse 1 bestehend aus Einbaurahmen 2 und einem Dämmstoffkörper 4. Das Abdeckelement 3 wurde zur Vereinfachung in dieser Figur weggelassen. Wie auch in der Figur 1 ersichtlich, befinden sich am Einbaurahmen 2 die Sollbruchstellen 15. Der Einbaurahmen 2 bildet an seinen Umfangsflächen einen Befestigungsabschnitt 8 aus. Dieser Befestigungsabschnitt 8 wird in weiterer Folge mit dem umliegenden Dämmstoff 30 der Gebäudeisolation verbunden. Am Abschlusssteg 9 befinden sich Ankerpunkte 7, über welche der Einbaurahmen 2 zusätzlich mittels Befestigungsmittel am Dämmstoff 30 (in Figur 3a ersichtlich) befestigt werden kann. Dies kann bspw. über Schrauben, Nägel oder Stifte erfolgen. Über den zumindest einen Durchbruch 6 kann ein flüssiges, schaumartiges oder pastöses Befestigungsmittel 32 (siehe Figur 6b) injiziert werden. Der Dämmstoffkörper 4 kann anhand eines Griffes 14 in den Einbaurahmen 2 eingeschoben werden. Auch das Herausziehen aus dem Einbaurahmen 2 wird durch den Griff 14 erleichtert. Der Dämmstoffkörper 4 weist eine Ummantelung 16 auf. Diese Ummantelung 16 schützt den Dämmstoffkörper 4 vor Oberflächenbeschädigung bzw. erleichtert das Einschieben und Herausziehen des Dämmstoffkörpers 4 relativ zum Einbaurahmen 2. Der Griff 14 kann an dem Dämmstoffkörper 4 angebracht sein oder auch durch den Dämmstoffkörper 4 ausgeformt werden.

Figur 3a zeigt schematisch dargestellt ein Einbaugehäuse 1 in einer Schnittdarstellung in der Seitenansicht. Der Einbaurahmen 2 wurde in eine Öffnung im Dämmstoff 30 eingeschoben und umschließt eine elektrische oder sanitäre Installation 40, welche an der Gebäudewand 31 befestigt ist. Diese kann bspw. durch eine Trennstelle für einen Blitzableiter ausgebildet sein oder durch eine andere Einrichtung, wie z. B. einen Wasserzähler oder einen Absperrhahn. Zum Verhindern einer Kältebrücke wird der Dämmstoffkörper 4 in den Einbaurahmen 2 eingeschoben. Der Einbaurahmen 2 schließt an der Gebäudewand 31 mit der Ausnehmung 12 ab. Die Umrandung 13 kontaktiert dabei nicht oder zumindest abschnittsweise die Gebäudewand 31. Zur Abschottung vor Umwelteinflüssen wie Regen oder auch aufgrund des optischen Erscheinungsbildes wird ein Abdeckelement 3 über der Öffnung 11 des Einbaurahmens 2 befestigt. Die Befestigung des Abdeckelementes 3 erfolgt dabei lösbar und kann bspw. über eine Schraub- oder Klickverbindung erfolgen. Der Einbaurahmen 2 wird über die Befestigungsabschnitte 8 ausschließlich mit dem Dämmstoff 30 verbunden. Eine Verbindung des Einbaurahmens 2 mit der Gebäudewand 31 ist nicht notwendig. Die Verbindung zwischen Einbaurahmen 2 und Dämmstoff 30 erfolgt über ein Befestigungsmittel 32.

Die Figur 3b zeigt das im Wesentlichen rechteckig ausgeformte Einbaugehäuse 1 in der Vorderansicht mit eingeschobenem Dämmstoffkörper 4. Anstelle einer rechteckigen Form könnte das Einbaugehäuse 1 auch die Form eines anderen Mehreckes oder eine kreisrunde Form aufweisen. Der Dämmstoffkörper 4 kann auch durch Injizieren von schaumartigem und aushärtendem Schaum in das Einbaugehäuse 1 ausgebildet werden. Das Abdeckelement 3 wurde in dieser Ansicht der Einfachheit halber weggelassen. Im Abschlusssteg 9 befinden sich Ankerpunkte 7 für eine zusätzliche Befestigung des Einbaugehäuses 1 an dem Dämmstoff 30. Diese Befestigung ist jedoch nicht zwingend vorgesehen, kann jedoch zum Beispiel als Vormontage vor dem Einschäumen des Einbaurahmens 2 erfolgen. Der zumindest eine Durchbruch 6 dient zum Injizieren des Befestigungsmittels 32. Der Griff 14 am Dämmstoffkörpers 4 erleichtert den Ein- und Ausbau des Dämmstoffkörpers 4.

Figur 4a zeigt eine Variante des Einbaugehäuses als Befestigungselement für Installationen oder Gegenstände, die an der Außenseite des Dämmstoffes 30 befestigt werden sollen. Der Dämmstoffkörper 4 weist dabei einen Kanal 5 auf, der zum Durchführen einer elektrischen oder sanitären Installation 40 in Form eines Kabels oder einer Leitung für sanitäre Anlagen dient. Wie auch in der Figur 3a wird der Einbaurahmen 2 mittels Befestigungsmittel 32 am Dämmstoff 30 befestigt. Eine Befestigung an der Gebäudewand 31 ist nicht vorgesehen. Das Abdeckelement 3 kann dabei direkt am Dämmstoffkörper 4 oder Einbaurahmen 2 nicht lösbar befestigt sein, oder auch lösbar und unabhängig vom Dämmstoffkörper 4 am Einbaurahmen 2 befestigt werden.
Die Dimension des Kanals 5 ist angepasst an die Dimension der sanitären oder elektrischen Installation 40, um den Effekt der Kältebrücke reduzieren oder ausschließen zu können. Alternativ kann der Kanal 5 auch nicht ausgeführt sein. In diesem Fall ist der Kanal 5 nach Bedarf bei Montage herzustellen.
Figur 4b zeigt, wie auch Figur 3b, das Einbaugehäuse 1 in der Vorderansicht ohne Abdeckung 3. Für eine zusätzliche Befestigung am Dämmstoff 30 sind die Ankerpunkte 7 vorgesehen. Eine Befestigung über die Ankerpunkte 7 ist nicht zwingend erforderlich. Die Durchbrüche 6 dienen zur Injektion von einem Befestigungsmittel 32. Am Abdeckelement 3 befindet sich die Vorbereitung 10 zur Befestigung von z. B. einem elektrischen Verbraucher wie einer Lampe oder auch für sanitäre Einrichtungen wie z. B. einem Wasserhahn.

Fig. 5a zeigt ein weiteres Ausführungsbeispiel des Einbaugehäuses 1. Dabei ist im Dämmstoffkörper 4 eine Ausnehmung vorgesehen, in welche eine Dose 20 eingesetzt werden kann. Diese Dose 20 dient beispielsweise zur Aufnahme einer Steckdose oder eines Schalters für eine elektrische Einrichtung. Es kann jedoch auch z. B. ein Wasserzähler an einer Wasserleitung in diese Ausnehmung eingesetzt werden. Auch hier besteht die Möglichkeit, das Abdeckelement 3 direkt am Dämmstoffkörper 4 oder dem Einbaurahmen 2 nicht lösbar zu befestigen oder dieses separat nach dem Einführen des Dämmstoffkörpers 4 am Einbaurahmen 2 zu befestigen. An der Umrandung 13 kann im Bedarfsfall ein Dichtmittel 17 angebracht werden. Dieses Dichtmittel 17 kann beispielsweise durch ein selbstklebendes und elastisches Dichtband, eine Silikonraupe oder eine aufsteckbare Gummidichtung ausgeführt sein und stellt eine sichere Abtrennung zwischen dem Innenraum des Einbaurahmens 2 und dem an der Außenseite des Einbaurahmens 2 befindlichen Dämmstoff 30 her. Wie auch in der Fig. 4a ersichtlich, wird die elektrische oder sanitäre Installation 40 in Form eines Kabels oder einer Leitung durch den Kanal 5 durch den Dämmstoffkörper 4 geführt. Alternativ kann der Kanal 5 auch nicht ausgeführt sein. In diesem Fall ist der Kanal nach Bedarf bei Montage herzustellen.

Fig. 5b zeigt die Variante aus der Fig. 5a in der Vorderansicht. In der Ausnehmung des Dämmstoffkörpers 4 kann eine Dose 20 eingesetzt werden.

Fig. 6a zeigt den ersten Schritt des Montageablaufes zur Installation eines Einbaugehäuses 1. Vor Montagebeginn des Einbaugehäuses 1 wird die elektrische
oder sanitäre Installation 40 durch Ausschneiden des angrenzenden Dämmstoffes 30 freigelegt. Die Größe des Ausschnittes wird durch die Größe des Einbaurahmens 2 definiert. Vorzugsweise erfolgt der Ausschnitt etwas größer als der Umfang des Einbaugehäuses 1, da der entstehende Hohlraum H (siehe Fig. 6b) durch ein Befestigungsmittel 32 (siehe Fig. 6b) ausgefüllt wird.

Fig. 6b zeigt den angepassten, eingeschobenen Einbaurahmen 2, welcher mit den Abschlussstegen 9 an der Außenseite des Dämmstoffes 30 anliegt. Der Einbaurahmen 2 kann nun z. B. über Schrauben an den Ankerpunkten 7 mit dem Dämmstoff 30 verbunden werden. Zur Befestigung des Einbaurahmens 2 wird über die Durchbrüche 6 ein Befestigungsmittel 32 in den Hohlraum H injiziert. Der Hohlraum H wird dabei im Wesentlichen vollständig durch das Befestigungsmittel 32 ausgefüllt und somit wird das Entstehen einer Kältebrücke verhindert. Weiters entsteht eine formstabile Verbindung zwischen Einbaurahmen 2 und Dämmstoff 30.

Fig. 6c zeigt das Einschieben des Dämmstoffkörpers 4 in den Einbaurahmen 2. Das Befestigungsmittel 32 ist zu diesem Zeitpunkt bereits ausgehärtet und der Einbaurahmen 2 im Dämmstoff 30 integriert.

Fig. 6d zeigt, wie das Abdeckelement 3 am Einbaurahmen 2 befestigt wird. Die hier gezeigte Befestigung erfolgt lösbar.

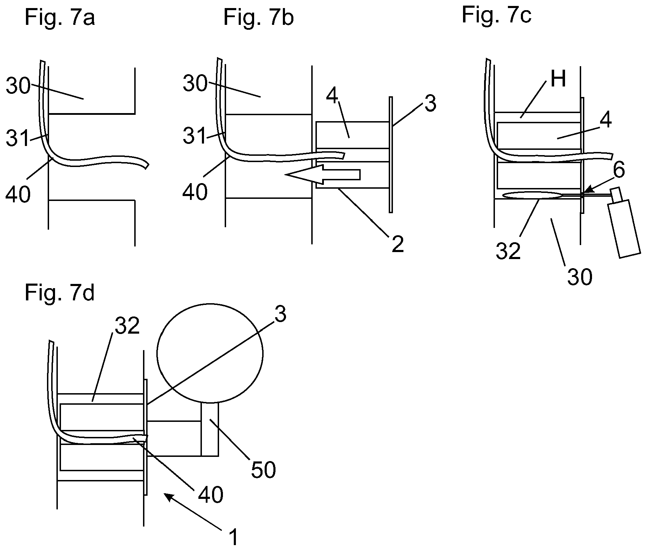

Fig. 7a zeigt einen ersten Montageschritt der Variante des Einbaugehäuses 1, welches als Geräteträger verwendet wird. Dabei wird der Bereich um eine elektrische oder sanitäre Installation 40, beispielsweise in Form einer Leitung, ausgespart. Der Dämmstoff 30 kann in diesem Bereich ausgeschnitten oder bereits beim Verlegen des Dämmstoffes 30 freigelassen werden.

Fig. 7b zeigt das Einbringen des Dämmstoffkörpers 4, wobei in dieser Variante bereits ein Einbaurahmen 2 am Dämmstoffkörper 4 befestigt ist oder durch diesen ausgebildet wird. Vorher muss die Länge des Einbaurahmens 2 bzw. des Dämmstoffkörpers 4 an die Stärke des Dämmstoffes 30 angepasst werden. Die elektrische oder sanitäre Installation 40 wird beim Einschieben des Dämmstoffkörpers 4 durch den Kanal 5 durchgefädelt.

Fig. 7c zeigt den nächsten Arbeitsschritt nach dem Einsetzen des Dämmstoffkörpers 4. Der Hohlraum H zwischen Dämmstoffkörper 4 und Dämmstoff 30 wird dabei mittels Befestigungsmittel 32 ausgefüllt. Das Befestigungsmittel 32 wird über den zumindest einen Durchbruch 6 in den Hohlraum H injiziert.

Fig. 7d zeigt die Anwendung des Einbaugehäuses 1 als Geräteträger. Ein Verbraucher 50 wurde am Abdeckelement 3 befestigt. In diesem Fall handelt es sich um eine Lampe. Anstelle einer Lampe kann z. B. auch ein Wasserhahn oder eine Verteilersteckdose bzw. auch ein einfacher Halter für z. B. Gartengeräte an dem Abdeckelement 3 befestigt werden.

## Patentansprüche

1. Einbaugehäuse (1) zur Einhausung und/oder Befestigung elektrischer, sanitärer und sonstiger Installationen (40) an einer mit einem Dämmstoff (30) oder mit einer vorgesetzten Fassade beschichteten Gebäudewand (31), umfassend
- einen am Dämmstoff (30) oder der vorgesetzten Fassade zu befestigenden Einbaurahmen (2),
- ein Abdeckelement (3) zum Verschließen des Einbaurahmens (2) an einer in Montagestellung (M) von der Gebäudewand (31) abgewandten Öffnung (11) des Einbaurahmens (2),
wobei zumindest ein Dämmstoffkörper (4) in den Einbaurahmen (2) einsetzbar ist, wobei sich der Dämmstoffkörper (4) im Montagezustand (M) zwischen der Gebäudewand (31) und dem Abdeckelement (3) befindet, **dadurch gekennzeichnet, dass** der Einbaurahmen (2) umfangsseitig an zumindest einer Fläche zumindest einen in Montagestellung (M) des Einbaurahmens (2) an der Außenseite (A) des Dämmstoffes (30) anliegenden Abschlusssteg (9) ausbildet und der zumindest eine Abschlusssteg (9) zumindest einen Durchbruch (6) aufweist, durch welchen in Montagestellung (M) des Einbaugehäuses (1) ein Befestigungsmittel (32) - insbesondere Montageschaum, Bauschaum, Isolierschaum, Füllschaum, Dämmschaum oder Klebemörtel - in einen Hohlraum (H) zwischen dem Dämmstoff (30) und dem Einbaurahmen (2) injizierbar ist.

2. Einbaugehäuse nach Anspruch 1, **dadurch gekennzeichnet, dass** der Dämmstoffkörper (4) in Montagestellung des Einbaugehäuses (1) zur Gebäudewand (31) beabstandet ist.

3. Einbaugehäuse nach Anspruch 1 oder 2, **dadurch gekennzeichnet, dass** gegenüber der Öffnung (11) des Einbaurahmens (2) eine Ausnehmung (12) mit einer Umrandung (13) ausgebildet ist, wobei die Umrandung (13) in Montagestellung (M) zumindest abschnittsweise mit der Gebäudewand (31) kontaktiert oder von der Gebäudewand (31) beabstandet ist.

4. Einbaugehäuse nach einem der Ansprüche 1 bis 3, **dadurch gekennzeichnet, dass** der Einbaurahmen (2) im Wesentlichen rechteckig ausgeformt ist.

5. Einbaugehäuse nach einem der Ansprüche 1 bis 4, **dadurch gekennzeichnet, dass** der Einbaurahmen (2) umfangsseitig zumindest abschnittsweise einen Befestigungsabschnitt (8) zum Befestigen an einem Dämmstoff (30) ausbildet.

6. Einbaugehäuse nach einem der Ansprüche 1 bis 5, **dadurch gekennzeichnet, dass** das Abdeckelement (3) als vollständig geschlossene Abdeckung an der Öffnung (11) des Einbaurahmens (2) befestigbar ist oder nicht lösbar mit dem Dämmstoffkörper (4) verbunden ist.

7. Einbaugehäuse nach einem der Ansprüche 1 bis 6, **dadurch gekennzeichnet, dass** das Abdeckelement (3) Vorbereitungen (10) zur Aufnahme von elektrischen, sanitären oder sonstigen Installationen (40) aufweist.

8. Einbaugehäuse nach einem der Ansprüche 1 bis 7, **dadurch gekennzeichnet, dass** der Einbaurahmen (2) umfangsseitig angeordnete Sollbruchstellen (11) zur Anpassung an eine Einbautiefe (7) aufweist.

9. Einbaugehäuse nach einem der Ansprüche 1 bis 8, **dadurch gekennzeichnet, dass** der Einbaurahmen (2) teleskopartig zur Anpassung an eine Einbautiefe (7) ausgeführt ist.

10. Einbaugehäuse nach einem der Ansprüche 1 bis 9, **dadurch gekennzeichnet, dass** der Dämmstoffkörper (4) umfangsseitig im Wesentlichen die selbe Kontur aufweist wie die Innenseite des Einbaurahmens (2) und der Dämmstoffkörper (4) in den Einbaurahmen (2) einbringbar ist.

11. Einbaugehäuse nach einem der Ansprüche 1 bis 10, **dadurch gekennzeichnet, dass** zwischen dem zumindest einen Dämmstoffkörper (4) und dem Einbaurahmen (2) eine formschlüssige Verbindung herstellbar ist.

12. Einbaugehäuse nach einem der Ansprüche 1 bis 11, **dadurch gekennzeichnet, dass** der Dämmstoffkörper (4) durch eine Ummantelung (16) eingefasst ist.

13. Verfahren zum Einbau eines Einbaugehäuses (1) nach einem der Ansprüche 1 bis 12, durch folgende Arbeitsschritte gekennzeichnet:
- Schaffen einer Öffnung im Dämmstoff (30) einer thermisch isolierten Gebäudewand (31) und eventuelles Freilegen von elektrischen oder sanitären Installationen (40).
- Anpassen des Einsatzrahmens (2) an die durch die Stärke des Dämmstoffes (30) vorgegebene Einbautiefe (t) über eine Sollbruchstelle (15), durch ein Trennverfahren an einer Markierung oder durch einen teleskopartigen Aufbau des Einsatzrahmens (2).
- Eventuelles Aufsetzen einer Dichtung (17) am Einsatzrahmen (2).
- Einsetzen des Einsatzrahmens (2) in die Öffnung im Dämmstoff (30).
- Injizieren des Befestigungsmittels (32) durch den zumindest einen Durchbruch (6) im zumindest einen Abschlusssteg (9) und Ausfüllen des zwischen Dämmstoff (30) und Einsatzrahmen (2) befindlichen Hohlraumes (H).
- Einsetzen des Dämmstoffkörpers (4) in den Einsatzrahmen (2).
- Befestigen des Abschlusselementes (3).

## Claims

1. An installation housing (1) for housing and/or fixing electrical, sanitary or other installations (40) to a building wall (31) covered with an insulating material (30) or with a façade fitted thereto, including
- an installation frame (2) to be fixed to the insulating material (30) or the fagade,
- a cover element (3) for closing the installation frame (2) at an opening (11) of the installation frame (2), that faces away from the building wall (31) in the mounted position (M),
wherein at least one insulating material body (4) can be fitted into the installation frame (2), wherein the insulating material body (4) is disposed in the mounted condition (M) between the building wall (31) and the cover element (3), **characterised in that** at the periphery at at least one surface the installation frame (2) provides at least one closure flange (9) which in the mounted position (M) of the installation frame (2) bears against the outside (A) of the insulating material (30) and the at least one closure flange (9) has at least one aperture (6) through which in the mounted position (M) of the installation housing (1) a fixing means (32) - in particular mounting foam, building foam, isolating foam, filling foam, insulating foam or adhesive mortar - can be injected into a cavity (H) between the insulating material (30) and the installation frame (2).

2. An installation housing according to claim 1 **characterised in that** the insulating material body (4) is spaced in the mounted position of the installation housing (1) relative to the building wall (31).

3. An installation housing according to claim 1 or claim 2 **characterised in that** an orifice (12) having an edge portion (13) is provided opposite the opening (11) of the installation frame (2), wherein the edge portion (13) in the mounted position (M) at least portion-wise is in contact with the building wall (31) or is spaced from the building wall (31).

4. An installation housing according to one of claims 1 to 3 **characterised in that** the installation frame (2) is of a substantially rectangular shape.

5. An installation housing according to one of claims 1 to 4 **characterised in that** the installation frame (2) at the periphery at least portion-wise provides a fixing portion (8) for fixing to an insulating material (30).

6. An installation housing according to one of claims 1 to 5 **characterised in that** the cover element (3) can be fixed as a completely closed cover to the opening (11) of the installation frame (2) or is non-releasably connected to the insulating material body (4).

7. An installation housing according to one of claims 1 to 6 **characterised in that** the cover element (3) has preparatory means (10) for receiving electrical, sanitary or other installations (40).

8. An installation housing according to one of claims 1 to 7 **characterised in that** the installation frame (2) has predetermined break locations (11) arranged at the periphery for adaptation to an installation depth (7).

9. An installation housing according to one of claims 1 to 8 **characterised in that** the installation frame (2) is designed telescopically for adaptation to an installation depth (7).

10. An installation housing according to one of claims 1 to 9 **characterised in that** at the periphery the insulating material body (4) is of substantially the same contour as the inside of the installation frame (2) and the insulating material body (4) can be introduced into the installation frame (2).

11. An installation housing according to one of claims 1 to 10 **characterised in that** a positively locking connection can be made between the at least one insulating material body (4) and the installation frame (2).

12. An installation housing according to one of claims 1 to 11 **characterised in that** the insulating material body (4) is enclosed by a casing (16).

13. A method of installing an installation housing (1) according to one of claims 1 to 12, **characterised by** the following working steps:
- providing an opening in the insulating material (30) of a thermally insulated building wall (31) and possibly exposing electrical or sanitary installations (40),
- adapting the insert frame (2) to the installation depth (t) which is predetermined by the thickness of the insulating material (30) by way of a predetermined break location (15), by a division method at a marking or by the insert frame (2) being of a telescopic structure,
- possibly fitting a seal (17) to the insert frame (2),
- inserting the insert frame (2) into the opening in the insulating material (30),
- injecting the fixing means (32) through the at least one aperture (6) in the at least one closure flange (9) and filling the cavity between the insulating material (30) and the insert frame (2),
- inserting the insulating material body (4) into the insert frame (2), and
- fixing the closure element (3).

## Revendications

1. Boîtier de montage (1) destiné à loger et/ou fixer des installations (40) électriques, sanitaires et autres sur une paroi de bâtiment (31) revêtue d'un isolant (30) ou d'une façade avancée, comprenant
- un cadre de montage (2) à fixer sur l'isolant (30) ou la façade avancée,
- un élément de recouvrement (3) pour la fermeture du cadre de montage (2) sur une ouverture (11) du cadre de montage (2) éloignée de la paroi de bâtiment (31) en position de montage (M),
dans lequel au moins un corps isolant (4) peut être inséré dans le cadre de montage (2), dans lequel le corps isolant (4) se trouve dans l'état de montage (M) entre la paroi de bâtiment (31) et l'élément de recouvrement (3), **caractérisé en ce que** le cadre de montage (2) forme à sa périphérie à au moins une surface, au moins une nervure terminale (9) reposant en position de montage (M) du cadre de montage (2) sur le côté extérieur (A) de l'isolant (30) et l'au moins une nervure terminale (9) présente au moins une brèche (6), par laquelle en position de montage (M) du boîtier de montage (1) un moyen de fixation (32), en particulier une mousse de montage, mousse de construction, mousse isolante, mousse de remplissage, mousse isolante ou mortier colle, peut être injecté dans un espace creux (H) entre l'isolant (30) et le cadre de montage (2).

2. Boîtier de montage selon la revendication 1, **caractérisé en ce que** le corps isolant (4) est espacé de la paroi de boîtier (31) en position de montage du boîtier de montage (1).

3. Boîtier de montage selon la revendication 1 ou 2, **caractérisé en ce qu'**un évidement (12) avec une bordure (13) est réalisé face à l'ouverture (11) du cadre de montage (2), dans lequel la bordure (13) touche en position de montage (M) au moins par section la paroi de boîtier (31), ou est espacée de la paroi de boîtier (31).

4. Boîtier de montage selon l'une quelconque des revendications 1 à 3, **caractérisé en ce que** le cadre de montage (2) est façonné de manière sensiblement rectangulaire.

5. Boîtier de montage selon l'une quelconque des revendications 1 à 4, **caractérisé en ce que** le cadre de montage (2) réalise à sa périphérie au moins par endroits une porte de fixation (8) pour la fixation sur un isolant (30).

6. Boîtier de montage selon l'une quelconque des revendications 1 à 5, **caractérisé en ce que** l'élément de recouvrement (3) peut être fixé en tant que recouvrement complètement fermé sur l'ouverture (11) du cadre de montage (2) ou n'est pas raccordé de manière amovible au corps isolant (4).

7. Boîtier de montage selon l'une quelconque des revendications 1 à 6, **caractérisé en ce que** l'élément de recouvrement (3) présente des préparations (10) pour le logement d'installations (40) électriques, sanitaires ou autres.

8. Boîtier de montage selon l'une quelconque des revendications 1 à 7, **caractérisé en ce que** le cadre de montage (2) présente des points destinés à la rupture agencés à sa périphérie (11) pour l'adaptation à une profondeur de montage (7).

9. Boîtier de montage selon l'une quelconque des revendications 1 à 8, **caractérisé en ce que** le cadre de montage (2) est réalisé de manière télescopique pour l'adaptation à une profondeur de montage (7).

10. Boîtier de montage selon l'une quelconque des revendications 1 à 9, **caractérisé en ce que** le corps isolant (4) présente côté périphérie sensiblement le même contour que le côté intérieur du cadre de montage (2) et le corps isolant (4) peut être introduit dans le cadre de montage (2).

11. Boîtier de montage selon l'une quelconque des revendications 1 à 10, **caractérisé en ce qu'**une liaison à complémentarité de formes peut être établie entre l'au moins un corps isolant (4) et le cadre de montage (2).

12. Boîtier de montage selon l'une quelconque des revendications 1 à 11, **caractérisé en ce que** le corps isolant (4) est bordé par une gaine (16).

13. Procédé de montage d'un boîtier de montage (1) selon l'une quelconque des revendications 1 à 12, **caractérisé par** les étapes de travail suivantes :
- la création d'une ouverture dans l'isolant (30) d'une paroi de bâtiment (31) isolée thermiquement et le dégagement éventuel d'installations (40) électriques ou sanitaires,
- l'adaptation du cadre d'insertion (2) à la profondeur de montage (t) prédéfinie par l'épaisseur de l'isolant (30) sur un point destiné à la rupture (15), par un procédé de séparation sur un marquage ou par une structure télescopique du cadre d'insertion (2),
- le placement éventuel d'une garniture (17) sur le cadre d'insertion (2),
- l'insertion du cadre d'insertion (2) dans l'ouverture dans l'isolant (30),
- l'injection du moyen de fixation (32) par l'au moins une brèche (6) dans l'au moins une nervure terminale (9) et le remplissage de l'espace creux (H) se trouvant entre l'isolant (30) et le cadre d'insertion (2),
- l'insertion du corps isolant (4) dans le cadre d'insertion (2),
- la fixation de l'élément de recouvrement (3).
